(19)

Europäisches
Patentamt
European
Patent Office
Office européen
des brevets

(11) **EP 4 332 171 A1**

(12) **EUROPEAN PATENT APPLICATION**
published in accordance with Art. 153(4) EPC

(43) Date of publication:
**06.03.2024 Bulletin 2024/10**

(21) Application number: **22795217.3**

(22) Date of filing: **09.02.2022**

(51) International Patent Classification (IPC):
**C08L 97/02** (2006.01)   **C08L 101/00** (2006.01)

(52) Cooperative Patent Classification (CPC):
**C08L 97/02; C08L 101/00**

(86) International application number:
**PCT/JP2022/004990**

(87) International publication number:
**WO 2022/230294 (03.11.2022 Gazette 2022/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.04.2021   JP 2021074738**

(71) Applicant: **Denka Company Limited
Tokyo 103-8338 (JP)**

(72) Inventors:
• **ISE, Kanae
Tokyo 103-8338 (JP)**
• **TAKASE, Hideaki
Tokyo 103-8338 (JP)**

(74) Representative: **Murgitroyd & Company
Murgitroyd House
165-169 Scotland Street
Glasgow G5 8PL (GB)**

(54) **RESIN COMPOSITION FOR MOLDED ARTICLE PAINTED WITH WATER-BASED PAINT AND MOLDED ARTICLE MOLDED FROM SAME**

(57)     [Problem] To provide a resin composition that can provide: a molded article that has a small blending amount of resin material derived from a fossil resource and that has a good paintability with respect to water-based paints; and a molded article thereof.

[Solution] A resin composition for a molded article to be painted with a water-based paint, the resin composition containing a thermoplastic resin (A), and a filler (B) derived from natural materials at a mass ratio ((A)/(B)) of 50/50-30/70, wherein the filler (B) contains at least one filler selected from an inorganic filler (B1) derived from a biomineral and an organic filler (B2) derived from a plant.

EP 4 332 171 A1

**Description**

**TECHNICAL FIELD**

The present invention relates to a resin composition for a molded article to be painted with a water-based paint, and a molded article molded from the same.

**BACKGROUND**

Conventionally, resin products that are used in home appliances, interior trimmings in automobiles, toys, etc. are molded by injection molding, etc. Among these, products for which surface appearance is important may have a coating applied to a surface thereof. Moreover, regarding toys, etc. made of resin, products that can be freely painted by consumers as desired are also known (for example, Patent Document 1, etc.).

Meanwhile, in recent years, increasing importance has been placed on environmental issues such as global warming, etc., and it is desirable to reduce the used amounts of resin materials derived from fossil resources such as petroleum. In response to such a requirement, measures are being considered, such as, for example, blending biomass materials into thermoplastic resins to reduce the amount of resin materials that are used. Meanwhile, in the field of painting, there is a growing demand for water-based paints with less environmental impact (for example, Patent Document 2, etc.).

**CITATION LIST**

**PATENT LITERATURE**

Patent Document 1: JP S61-106646 A

Patent Document 2: JP 2016-188338 A

**SUMMARY OF INVENTION**

**TECHNICAL PROBLEM**

The present invention was made in consideration of the above-mentioned circumstances, and an objective of the present invention is to provide: a resin composition that can provide a molded article that has a small blending amount of a resin material derived from a fossil resource and that has a good paintability with respect to water-based paints; and a molded article thereof.

**SOLUTION TO PROBLEM**

The present inventors diligently studied the above-mentioned problem, and as a result, discovered that a molded article obtained from a resin composition in which a filler derived from natural materials and a thermoplastic resin are combined at a specific mass ratio has an improved wettability with respect to water and a good paintability with respect to water-based paints. In addition, the present inventors discovered that such resin composition can reduce the blending amount of a thermoplastic resin derived from a fossil resource and can provide a molded article with less environmental impact, thereby completing the present invention.
That is, the present invention has the aspects below.

[1] A resin composition for a molded article to be painted with a water-based paint, the resin composition containing a thermoplastic resin (A), and a filler (B) derived from natural materials at a mass ratio ((A)/(B)) of 50/50-30/70, wherein the filler (B) contains at least one filler selected from an inorganic filler (B1) derived from a biomineral and an organic filler (B2) derived from a plant.

[2] The resin composition for a molded article to be painted with a water-based paint according to [1], wherein the thermoplastic resin (A) contains a polystyrene-based resin (A1), and the filler (B) contains the inorganic filler (B1) or the organic filler (B2).

[3] The resin composition for a molded article to be painted with a water-based paint according to [1], wherein the thermoplastic resin (A) contains a polyolefin-based resin (A2), and the filler (B) contains the organic filler (B2).

[4] The resin composition for a molded article to be painted with a water-based paint according to [1] or [2], wherein the inorganic filler (B1) contains at least one powder selected from an eggshell powder and a mollusk shell powder.

[5] The resin composition for a molded article to be painted with a water-based paint according to any one of [1] to [3], wherein the organic filler (B2) contains a crushed material from a tree.

[6] The resin composition for a molded article to be painted with a water-based paint according to [5], wherein the crushed material from a tree contains at least one crushed material selected from a leaf, a stem, a bud, and a seed of a tree.

[7] The resin composition for a molded article to be painted with a water-based paint according to any one of [1] to [6], wherein the filler (B) is a filler derived from food waste.

[8] The resin composition for a molded article to be painted with a water-based paint according to [7], wherein the organic filler (B2) contains at least one filler selected from tea grounds and coffee grounds.

[9] A molded article containing the resin composition for a molded article to be painted with a water-based paint according to any one of [1] to [8].

## EFFECTS OF INVENTION

According to the present invention, it is possible to provide: a resin composition that can provide a molded article that has a small blending amount of a resin material derived from a fossil resource and has a good paintability with respect to water-based paints; and a molded article thereof.

## DESCRIPTION OF EMBODIMENTS

The present invention shall be explained in more detail below, but the present invention is not limited to the aspects below. Note that herein, "-(hyphen)" with regard to numerical range means "or more" and "or less." That is, "3-50" means "3 or more and 50 or less".

[Resin composition for molded article to be painted with water-based paint]

The resin composition for a molded article to be painted with a water-based paint according to the present invention contains a thermoplastic resin (A), and a filler (B) derived from natural materials at a mass ratio ((A)/(B)) of 50/50-30/70, wherein the filler (B) contains at least one filler selected from an inorganic filler (B1) derived from a biomineral and an organic filler (B2) derived from a plant. The resin composition for a molded article to be painted with a water-based paint according to the present invention (hereinafter, sometimes referred to as the "resin composition") has an improved wettability with respect to water and can provide a molded article that has a good paintability with respect to water-based paints. In addition, since the ratio of the thermoplastic resin (A) in the resin composition can be reduced, the impact on the environment is smaller.

The mass ratio ((A)/(B)) of the thermoplastic resin (A) in the resin composition to the filler (B) derived from natural materials (hereinafter, referred to as the "filler (B)") is 50/50-30/70, preferably 45/55-30/70, and more preferably 40/60-30/70. If the above mass ratio ((A)/(B)) is 50/50-30/70, a molded article that has an improved wettability with respect to water and a good paintability with respect to water-based paints can be provided. Note that the above-mentioned mass ratio ((A)/(B)) indicates the ratio when the total amount of the thermoplastic resin (A) and the filler (B) is 100. That is, when the total amount of the thermoplastic resin (A) and the filler (B) with respect to the total amount of the resin composition is 80 mass%, "the mass ratio ((A)/(B)) of the thermoplastic resin (A) to the filler (B) is 50/50" indicates that the ratio of the thermoplastic resin (A) in the resin composition is 40 mass% and the ratio of the filler (B) is 40 mass%.

Herein, "wettability with respect to water" may be evaluated by the contact angle of the resin composition with respect to water, measured by the θ/2 method. Specifically, it is possible to employ a method of evaluating wettability with respect to water on the basis of a value of a contact angle obtained by press molding a resin composition with a pressure molding machine (50 t heat molding machine manufactured by Shoji Co., Ltd.) into a 150 mm x 150 mm molded article with a thickness of 1.0 mm at a heating temperature of 200°C, a pressure of 5 MPa, a preheating time of 3 minutes, and a pressurizing time of 3 minutes, and then measuring the contact angle of the surface of the obtained molded article with respect to water with a contact angle measuring device (manufactured by Kyowa Interface Science Co., Ltd.; product name: "Automatic Contact Angle Meter DM-500") at 25°C. Herein, "improved wettability with respect to water" indicates that a contact angle $\theta 2$, with respect to water, of the surface of the molded article obtained from the resin composition according to the present invention, as measured by the $\theta/2$ method, is smaller than a contact angle $\theta 1$, with respect to water, of the surface of the molded article obtained only from the thermoplastic resin (A). That is, the relationship $\theta 1 > \theta 2$ is indicated.

In one embodiment of the resin composition for a molded article to be painted with a water-based paint according to the present invention, the resin composition contains a thermoplastic resin (A), and a filler (B) derived from natural materials at a mass ratio ((A)/(B)) of 50/50-30/70, the filler (B) contains at least one filler selected from an inorganic filler (B1) derived from a biomineral and an organic filler (B2) derived from a plant, and the contact angle at 25°C, as measured by the $\theta/2$ method, is preferably 90° or less. Moreover, it is preferable that the above-mentioned $\theta 1$ and $\theta 2$ satisfy the following conditions (1) and (2).

$$\theta 1 - \theta 2 \geq 3° \cdots (1)$$

$$\theta 2 \leq 90° \cdots (2)$$

If $\theta 2$ is 90° or less and $\theta 1$ is larger than $\theta 2$ by 3° or more, the wettability with respect to water is better, and improving the paintability with respect to water-based paints becomes easier.

Note that the thermoplastic resin (A) preferably contains a polystyrene-based resin (A1) or a polyolefin-based resin (A2) described below. Moreover, the above-mentioned inorganic filler (B1) derived from a biomineral preferably contains an eggshell powder described below. Furthermore, the organic filler (B2) derived from a plant preferably contains tea grounds or coffee grounds described below.

The ratio of the filler (B) in the resin composition is preferably more than 20 mass%, more preferably 30 mass% or more, and yet more preferably 40 mass% or more with respect to the total mass of the resin composition. If the ratio of the filler (B) in the resin composition is more than 20 mass%, the above-mentioned $\theta 2$ is likely to be 90° or less, and improving the wettability of the obtained molded article with respect to water becomes easier. Moreover, from the viewpoint of reducing the blending amount of the thermoplastic resin (A) in the resin composition to achieve a resin composition having less environmental impact, the ratio of the filler (B) in the resin composition may be 50 mass% or more. Note that from the viewpoint of the moldability of the resin composition, the upper limit of the filler (B) is preferably less than 80 mass% and more preferably 70 mass% or less. That is, the ratio of the filler (B) in the resin composition can be adjusted in the range of more than 20 mass% and less than 80 mass%. From the viewpoint of being likely to improve the molding processability and the wettability with respect to water, the ratio of the filler (B) is particularly preferably 50-70 mass% with respect to the total mass of the resin composition.

The ratio of the thermoplastic resin (A) in the resin composition is, from the viewpoint of the molding processability, preferably more than 20 mass%. From the viewpoints of obtaining a molded article with a better paintability with respect to water-based paints and reducing the amount of resin materials derived from fossil resources, the ratio of the thermoplastic resin (A) in the resin composition is preferably in the range of 30-50 mass% with respect to the total mass of the resin composition.

<Thermoplastic resin (A)>

The resin composition according to the present invention contains a thermoplastic resin (A).

Examples of the thermoplastic resin (A) include polystyrene-based resins, polyolefin-based resins, polyester-based resins, polycarbonate-based resins, and the like.

(Polystyrene-based resin (A1))

The polystyrene-based resin according to the present invention is a polymer containing a monomer unit derived from an aromatic vinyl compound, and examples thereof include a polymer containing 50 mol% or more of a monomer unit derived from an aromatic compound in a molecular chain, such as polystyrene (GPPS, homopolymer of styrene), high-impact polystyrene (HIPS), a copolymer of an aromatic vinyl compound and a conjugated diene or a hydrogenated compound thereof, a graft copolymer of an aromatic compound and ethylene, a copolymer of an aromatic vinyl compound and a compound copolymerizable with the aromatic vinyl compound, and the like. The foregoing may be used alone or as a combination of two or more. That is, the polystyrene-based resin (A1) may be a mixture.

Examples of the aromatic vinyl compound include styrene, α-methylstyrene, p-methylstyrene, o-methylstyrene, m-methylstyrene, ethylstyrene, p-t-butylstyrene, and the like. These aromatic vinyl compounds may be used alone or as a combination of two or more. Among these, it is preferable to comprise styrene.

Examples of compounds that are copolymerizable with aromatic vinyl compounds include: methacrylic acid esters such as methyl methacrylate and ethyl methacrylate; unsaturated nitrile compounds such as acrylonitrile and methacrylonitrile; acid anhydrides such as maleic anhydride; and the like. Examples of copolymers of these compounds with aromatic vinyl compounds include acrylonitrile-butadiene-styrene copolymer (ABS), methyl methacrylate-butadiene-styrene copolymer (MBS), acrylonitrile-styrene copolymer (AS), and the like.

Examples of copolymers of aromatic compounds with conjugated dienes include block copolymers such as styrene-butadiene (SB), styrene-isoprene (SI), styrene-butadiene-butylene (SBB), styrene-butadiene-isoprene (SBI), styrene-butadiene-styrene (SBS), styrene-butadiene-butylene-styrene (SBBS), styrene-isoprene-styrene (SIS), styrene-butadiene-isoprene-styrene (SBIS), and the like, as well as block copolymers obtained by hydrogenating these copolymers. The foregoing may be used alone or as a combination of two or more.

Of the above, the polystyrene-based resin (A1) is preferably, from the viewpoint of high versatility, GPPS, ABS, AS, or MBS, with GPPS and ABS being more preferable. Moreover, the polystyrene-based resin has an MFR (200 °C and load of 5 kg) value of preferably 1-50 g/10 min and more preferably 3-30 g/10 min, measured in accordance with the JIS K 7260 standard.

(Polyolefin-based resin (A2))

Examples of the polyolefin-based resin include homopolymers of aliphatic olefin compounds such as high-density polyethylene, low-density polyethylene, linear low-density polyethylene, polypropylene-based resins, and poly-1-butene, as well as their copolymers. Examples of the copolymers include an ethylenepropylene copolymer, an ethylene-1-butene copolymer, an ethylene-methylpentene copolymer, and the like. Note that the polypropylene-based resins include a homopolymer of propylene and polyolefin copolymers containing 50 mol% or more monomer units of propylene. Moreover, the above polyolefin-based resin may be used alone or as a combination of two or more. Among these, from the viewpoint of high versatility, the polyolefin-based resin (A2) is preferably polypropylene, high-density polyethylene, or low-density polyethylene, with propylene being more preferable.

(Polyester-based resin)

Examples of the polyester-based resin include a resin obtained by copolymerizing a diol component such as diethylene glycol, neopentyl glycol, and polyalkylene glycol, and a dicarboxylic acid component such as adipic acid, sebacic acid, phthalic acid, isophthalic acid, and 2,6-naphthalenedicarboxylic acid. Specific examples of the polyester-based resin include polyethylene terephthalate, polybutylene terephthalate, polyethylene-2,6-naphthalate, polymethylene terephthalate, and the like. The foregoing may be used alone or as a combination of two or more.

(Polycarbonate-based resin)

The polycarbonate-based resin is a resin in which the carbonate group mainly serves the role of bonding the monomers. Examples of the polycarbonate-based resin include a compound obtained by reacting one or more bisphenols with phosgene or carbonic acid diester, or a compound obtained by reacting one or more bisphenols and diphenylcarbonates by an ester interchange method. Examples of the bisphenols include, in addition to bis-(4-hydroxyphenyl)-alkane represented by bisphenol A, bis-(4-hydroxyphenyl)-cycloalkane, bis-(4-hydroxyphenyl)-sulfide, bis-(4-hydroxyphenyl)-ether, bis-(4-hydroxyphenyl)-ketone, bis-(4-hydroxyphenyl)-sulfone, bisphenolfluorene, and the like. In addition, for the purpose of improving the processing characteristics, etc., a compound obtained by copolymerizing a compound such as hydroquinone and 4,4-dihydroxybiphenyl as a copolymer may be used as a divalent phenol other than the bisphenols. The polycarbonate-based resin may be used alone or as a combination of two or more.

The resin composition according to the present invention preferably contains, as the thermoplastic resin (A), a polystyrene-based resin (A1) or a polyolefin-based resin (A2) from the viewpoint that the moldability is likely to be better. In addition, the resin composition according to the present invention more preferably contains polystyrene (GPPS) or polypropylene.

<Filler (B) derived from natural materials>

The resin composition according to the present invention contains a filler (B). Herein, "derived from natural materials" indicates being derived from resources or materials other than fossil resources. The filler (B) according to the present invention contains at least one filler selected from an inorganic filler (B1) derived from a biomineral and an organic filler (B2) derived from a plant.

(Inorganic filler (B1) derived from biomineral)

The filler (B) according to the present invention contains an inorganic filler (B1) derived from a biomineral (hereinafter, referred to as the "inorganic filler (B1)"). The expression "biomineral" refers to a mineral made by an organism, examples of which include pearls, mollusk shells, eggshells, bones, crustacean exoskeletons, etc. As the inorganic filler (B1) according to the present invention, materials obtained by processing animal bones, eggshells, etc. into particle or powder forms can be used. As long as the effects of the present invention are exhibited, there are no particular limitations for the type of animals. Specific examples of the inorganic filler (B1) include: bone meal of livestock such as chickens, cows, pigs, and sheep; an eggshell powder of poultry; bone meal of fish and shellfish; a shellfish powder (mollusk shell powder); and the like. The foregoing may be used alone or as a combination of two or more. Among these, from the viewpoint of ease of obtaining and pulverizing, the inorganic filler (B1) preferably contains at least one powder selected from an eggshell powder and a mollusk shell powder, and more preferably contains an eggshell powder. Moreover, an eggshell powder and a mollusk shell powder are preferably powders derived from food waste from the viewpoint of further reducing the impact on the environment. Note that herein, the expression "derived from food waste" may refer to, in addition to processing residues created when producing food products or during a cooking process, materials derived from food waste such as unsold or leftover food arising during the food distribution process or in the consumption stage.

Eggshell powders are preferably those made from chicken eggshells. 200,000 tons or more of chicken eggshells are treated as waste each year, and an effective use thereof is desired. In addition, chicken eggshells generally contain 95 mass% or more of calcium carbonate. The eggshell powder contained in the inorganic filler (B1) according to the present invention preferably includes a chicken eggshell powder.

When using an eggshell powder as the inorganic filler (B1), the average particle size (D50) thereof is preferably 1-500 $\mu$m, more preferably 1-100 $\mu$m, and yet more preferably 1-50 $\mu$m. If the average particle diameter (D50) of the eggshell powder is within the above-mentioned range, the resin composition is likely to be a composition from which a molded article with a better paintability with respect to water-based paints can be obtained. Note that the above-mentioned average particle diameter (D50) refers to a particle diameter in which the cumulative value corresponds to 50% in a volume-based cumulative particle size distribution measured by a laser diffraction and scattering method (refractive index: 1.50). The cumulative particle diameter distribution is expressed as a distribution curve where the horizontal axis represents the particle diameter ($\mu$m) and the vertical axis represents the cumulative value (%). The volume-based cumulative particle diameter distribution measured by the laser diffraction and scattering method (refractive index: 1.50) is measured by using a laser diffraction and scattering particle size distribution measurement machine (manufactured by Beckman Coulter; product name: LS 13 320) with water (refractive index: 1.3) as the solvent, and as the pretreatment for 1 minute, using a homogenizer (manufactured by Branson Ultrasonics Corporation; model: DIGITAL SONIFIER 450) for dispersion processing.

The specific gravity of the eggshell powder is preferably 2.0-3.0, more preferably 2.0-2.8, and yet more preferably 2.3-2.7. Note that the specific gravity of the eggshell powder is a true specific gravity value measured under a condition of 25°C using a dry automatic density meter (manufactured by Micromeritics; product name: AccuPyc 111345).

When the inorganic filler (B1) is an eggshell powder or a mollusk shell powder, a conventionally known manufacturing method can be adopted as the manufacturing method thereof. That is, it is possible to obtain an eggshell powder or a mollusk shell powder having the desired average particle size (D50) by washing eggshells or mollusk shells, and thereafter crushing these eggshells or the mollusk shells by a known method and then classifying them.

A more specific method of obtaining an eggshell powder is to remove the eggshell membrane from the washed eggshells and thereafter dry the eggshells. Then, the eggshells are crushed with a crushing machine, etc. to obtain an eggshell powder. Then, the powder is classified using a sieve having an appropriate mesh size, thereby obtaining an eggshell powder.

Moreover, a commercially available product can also be used as the eggshell powder or the mollusk shell powder. Examples of a commercially available eggshell powder include product name GT-26 manufactured by Green Techno21 CO., LTD., product name Calhope (registered trademark) manufactured by Kewpie Egg Corporation, and the like. In addition, examples of commercially available mollusk shell powders include product name scallop shell calcined powder manufactured by UNICERA CO., LTD., product name Scallop Power 12 manufactured by Ohmi Co., Ltd., and the like.

(Organic filler (B2) derived from plant)

The filler (B) according to the present invention contains an organic filler (B2) derived from a plant (hereinafter, referred to as the "organic filler (B2)"). The organic filler (B2) is a filler material obtained from a plant in general and may be in fibrous, particulate, or powder form. The organic filler (B2) preferably contains a crushed material from a tree. Examples of the crushed material from a tree include, in addition to wood flour and bamboo flour, a material obtained by crushing at least one material selected from a leaf, a stem, a bud, and a seed of a tree. Among these, from the viewpoint of further reducing the impact on the environment, the crushed wood material more preferably includes: thinned wood or waste wood; a wood or bamboo powder made from sawdust, etc. discharged from lumber mills, or an organic filler material derived from food waste. Examples of the organic filler material derived from food waste include tea grounds, coffee grounds, and the like. In one aspect, the organic filler material (B2) preferably includes an organic filler material derived from food waste, and more preferably includes at least one material selected from tea grounds and coffee grounds.

Tea grounds are a residue after tea components are extracted and contain leaves, stems, buds, etc. of tea plants. Moreover, coffee grounds are a residue after coffee components are extracted and are porous particles obtained by crushing seeds of a coffee tree. The residues after extracting such beverage components have been increasing in recent years, and while these residues have been conventionally disposed of as food waste (or food product waste), the reuse thereof is being considered. As the organic filler (B2), blending tea grounds and coffee grounds makes it possible to obtain resin compositions with less impact on the environment. Moreover, combining tea grounds or coffee grounds with the thermoplastic resin (A) makes it easier to improve wettability with respect to water and to obtain a molded article with a better paintability with respect to water-based paints.

Regarding tea grounds, as long as the grounds are the residues after the extraction of tea components, as described above, the type is not particularly limited, and green tea, black tea, etc. may be used. When using tea grounds as the organic filler (B2), the tea grounds can be crushed into fibrous, particulate, or powder form and used. When tea ground particles are used, the average particle diameter thereof is preferably 0.001-5.0 mm and more preferably 0.001-2.0 mm from the viewpoint of moldability and kneadability of the resin composition. Note that the average particle diameter of tea grounds indicates an average value obtained by measuring the particle diameters (diameter or major axis) of 20 crushed tea grounds by calipers.

Since coffee grounds are processed into particles, they may be directly blended into the thermoplastic resin (A), or they may be crushed and further pulverized as needed. The coffee grounds have an average particle diameter of preferably 0.001-5.0 mm, and more preferably 0.001-2.0 mm from the viewpoint of moldability and kneadability of the resin composition. Note that the average particle diameter of coffee grounds indicates an average value obtained by measuring the particle diameters (diameter or major axis) of 20 crushed coffee grounds by calipers.

When residues after extracting beverage components such as tea grounds and coffee grounds are blended as the organic filler (B2), it is preferable to use dried residues. These tea grounds and coffee grounds preferably have a water content of 5% or less, more preferably 4% or less, and yet more preferably 3% or less.

In the first embodiment of the resin composition for a molded article to be painted with a water-based paint according to the present invention, the thermoplastic resin (A) preferably contains a polystyrene-based resin (A1), and the filler (B) preferably contains the inorganic filler (B1) or the organic filler (B2).

The resin composition according to the first embodiment preferably contains the polystyrene resin (A1) and the inorganic filler (B1) or the organic filler (B2) at a mass ratio ((A1)/(B1) or (A1)/(B2)) of 50/50-30/70. Moreover, the inorganic filler (B1) is preferably an eggshell powder. The organic filler (B2) is preferably tea grounds. Combining the eggshell powder or the tea grounds with the polystyrene-based resin (A1) at the above-mentioned mass ratio makes it easier to improve the wettability of the obtained molded article with respect to water and to obtain a molded article with a better paintability with respect to water-based paints.

In the first embodiment, the ratio of the inorganic filler (B1) or the organic filler (B2) in the resin composition is preferably more than 20 mass% and less than 80 mass%, more preferably 30-70 mass%, and yet more preferably 50-70 mass% with respect to the total mass of the resin composition. If the ratio of the inorganic filler (B1) or the organic filler (B2) is within the above-mentioned range, it is easier to obtain a molded article that is less likely to degrade in moldability and that has a better paintability with respect to water-based paints.

Moreover, the ratio of the polystyrene-based resin (A1) in the resin composition is preferably more than 20 mass% and less than 80 mass%, more preferably 30-70 mass%, and yet more preferably 30-50 mass% with respect to the total mass of the resin composition. If the ratio of the polystyrene-based resin (A1) is within the above-mentioned range, it is easier to obtain a molded article that is less likely to degrade in moldability and that has a better paintability with respect to water-based paints. Moreover, in the first embodiment, the polystyrene-based resin (A1) preferably contains GPPS.

In the second embodiment of the resin composition for a molded article to be painted with a water-based paint according to the present invention, the thermoplastic resin (A) preferably contains a polyolefin-based resin (A2), and the filler (B) preferably contains the organic filler (B2).

The resin composition according to the second embodiment preferably contains the polyolefin-based resin (A2) and the organic filler (B2) at a mass ratio ((A2)/(B2)) of 50/50-30/70. Moreover, the organic filler (B2) is preferably coffee grounds. Combining the polyolefin-based resin (A2) with the organic filler (B2) at a specific mass ratio makes it easier to improve the wettability of the obtained molded article with respect to water and to obtain a molded article with a better paintability with respect to water-based paints.

In the second embodiment, the ratio of the organic filler (B2) in the resin composition is preferably more than 20 mass% and less than 80 mass%, more preferably 30-70 mass%, and yet more preferably 50-70 mass% with respect to the total mass of the resin composition. If the ratio of the organic filler (B2) is within the above-mentioned range, it is easier to obtain a molded article that is less likely to degrade in moldability and that has a better paintability with respect to water-based paints.

Moreover, the ratio of the polyolefin-based resin (A2) in the resin composition is preferably more than 20 mass% and less than 80 mass%, more preferably 30-70 mass%, and yet more preferably 30-50 mass% with respect to the total mass of the resin composition. If the ratio of the polyolefin-based resin (A2) is within the above-mentioned range, it is easier to obtain a molded article that is less likely to degrade in moldability and that has a better paintability with respect to water-based paints. Moreover, in the second embodiment, the polyolefin-based resin (A2) preferably contains a polypropylene resin.

The resin composition according to the present invention may contain, as needed, other additives such as ultraviolet absorbers, photostabilizers, antioxidants, lubricants, plasticizers, colorants, antistatic agents, flame retardants, and mineral oils, and reinforcing fibers such as glass fibers, carbon fibers, and aramid fibers, and the like. The foregoing may be used alone or as a combination of two or more.

Examples of the ultraviolet absorbers include: benzotriazole-based ultraviolet absorbers such as 2-(5'-methyl-2'-hydroxyphenyl)benzotriazole, 2-(5'-t-butyl-2'-hydroxyphenyl)benzotriazole, 2-[2'-hydroxy-3',5'-bis($\alpha,\alpha$-dimethylbenzyl)phenyl]benzotriazole, 2-(3',5'-di-t-butyl-2'-hydroxyphenyl)benzotriazole, 2-(3'-t-butyl-5'-methyl-2'-hydroxyphenyl)-5-chlorobenzotriazole, 2-(3',5'-di-t-butyl-2'-hydroxyphenyl)-5-chlorobenzotriazole, 2-(3',5'-di-t-amyl-2'-hydroxyphenyl)benzotriazole, 2-[3'-(3",4",5",6"-tetrahydrophthalimidomethyl)-5'-methyl-2'-hydroxyphenyl]benzotriazole, and 2,2'-methylenebis[4-(1,1,3,3-tetramethylbutyl)-6-(2H-benzotriazole-2-yl)phenol]; oxalic acid anilide-based ultraviolet absorbers such as 2-ethoxy-2'-ethyl oxalic acid bis-anilide, 2-ethoxy-5-t-butyl-2'-ethyl oxalic acid bis-anilide, and 2-ethoxy-4'-isodecylphenyl oxalic acid bis-anilide; benzophenone-based ultraviolet absorbers such as 2-hydroxy-4-n-octoxybenzophenone, 2,4-dihydroxybenzophenone, 2-hydroxy-4-methoxybenophenone, 2-hydroxy-4-methoxy-5-sulfobenzophenone, 2,2'-dihydroxy-4-methoxybenzophenone, 2,2'-dihydroxy-4,4'-dimethoxybenzophenone, and 2-hydroxy-4-methoxy-2'-carboxybenzophenone; salicylic acid-based ultraviolet absorbers such as phenyl salicylate, p-t-butylphenyl salicylate, and p-octylphenyl salicylate; cyanoacrylate-based ultraviolet absorbers such as 2-ethylhexyl-2-cyano-3,3'-diphenyl acrylate and ethyl-2-cyano-3,3'-diphenyl acrylate; titanium oxide-based ultraviolet stabilizers such as rutile-type titanium oxide, anatase-type titanium oxide, alumina, silica, and titanium oxide treated with a surface treatment agent such as a silane coupling agent or a titanium-based coupling agent; and the like. The foregoing may be used alone or as a combination of two or more.

Examples of the photostabilizers include bis(2,2,6,6-tetramethyl-4-piperidyl)sebacate, bis(1,2,2,6,6-pentamethyl-4-piperidyl)sebacate, dimethyl succinate/1-(2-hydroxyethyl)-4-hydroxy-2,2,6,6-tetramethylpiperidine polycondensate, poly[[6,(1,1,3,3-tetramethylbutyl)amino-1,3,5-triazine-2,4-diyl] [(2,2,6,6-tetramethyl-4-piperidyl)imino]-hexamethylene-[(2,2,6,6-tetramethyl-4-piperidyl)imino]], 1-[2-[3-(3,5-di-t-butyl-4-hydroxyphenyl)propionyloxy]ethyl]-4-[3-(3,5-di-t-butyl-4-hydroxyphenyl)propionyloxy]-2,2,6,6-tetramethylpiperidine, and the like. The foregoing may be used alone or as a combination of two or more.

Examples of the antioxidants include: phenol-based antioxidants such as triethyleneglycol-bis[3-(3-t-butyl-5-methyl-4-hydroxyphenyl)propionate], 2,4-bis(n-octylthio)-6-(4-hydroxy-3,5-di-t-butylanilino)-1,3,5-triazine, pentaerythrityltetracis[3-(3,5-di-t-butyl-4-hydroxyphenyl)propionate], octadecyl-3-(3,5-di-t-butyl-4-hydroxyphenyl)propionate, 2,2-thiobis(4-methyl-6-t-butylphenol), and 1,3,5-trimethyl-2,4,6-tris(3,5-di-t-butyl-4-hydroxybenzyl)benzene; sulfur-based antioxidants such as ditridecyl-3,3'-thiodipropionate, dilauryl-3,3'-thiodipropionate, ditetradecyl-3,3'-thiodipropionate, distearyl-3,3'-thiodipropionate, and dioctyl-3,3'-thiodipropionate; phosphorus-based antioxidants such as trisnonylphenyl phosphite, 4,4'-butylidene-bis(3-methyl-6-t-butylphenyl-di-tridecyl)phosphite, (tridecyl)pentaerythritol diphosphite, bis(octadecyl)pentaerythritol diphosphite, bis(di-t-butylphenyl)pentaerythritol diphosphite, bis(di-t-butyl-4-methylphenyl)pentaerythritol diphosphite, dinonylphenyloctyl phosphonite, tetracis(2,4-di-t-butylphenyl) 1,4-phenylene-di-phosphonite, tetracis(2,4-di-t-butylphenyl) 4,4'-biphenylene-di-phosphonite, and 10-decyloxy-9,10-dihydro-9-oxa-10-phosphaphenanthrene; and the like. The foregoing may be used alone or as a combination of two or more.

Examples of the lubricants include, for example, magnesium stearate, zinc stearate, zinc 1,2-hydroxystearate, calcium stearate, lithium stearate, lithium 1,2-hydroxystearate, sodium stearate, erucamide, and the like. The foregoing may be used alone or as a combination of two or more.

[Resin composition production method]

The resin composition according to the present invention can be produced by melt-kneading the thermoplastic resin (A), the filler (B), and other components as needed. Specifically, the thermoplastic resin (A) and the filler (B) are each fed into a twin-screw extruder so as to make the mass ratio ((A)/(B)) thereof 50/50-30/70, thereafter other components are further added as necessary, melt-kneaded at a temperature of 180-250 °C, and then extruded in the form of strands, thereby enabling a pellet-shaped resin composition to be prepared.

[Use]

As described above, the resin composition according to the present invention can provide a molded article that has a good paintability with respect to water-based paints. Therefore, the resin composition is suitable for applications in molded articles to be painted with water-based paints, such as household appliances, interior trimmings in automobiles, toys, etc. Of course, the application of the resin composition according to the present invention is not limited to the above-mentioned applications.

[Molded Article]

The molded article according to the present invention can be painted with water-based paint to obtain a painted molded article.

The molded article according to the present invention contains the above-mentioned resin composition. Preferably, the molded article is obtained solely from the resin composition according to the present invention. The molded article according to the present invention has an improved wettability with respect to water and a good paintability with respect to water-based paints. In addition, since the molded article contains a filler derived from natural materials, and further, is molded from a resin composition with a small blending amount of resin material derived from fossil resources, the environmental impact can be reduced.

The method for manufacturing the molded article is not particularly limited and conventionally known methods can be employed. Specifically, pellets obtained from the resin composition according to the present invention can be used to obtain a molded article with a desired shape by means of injection molding. Thereafter, the molded article can be painted with water-based paint to obtain a painted molded article.

More preferable aspects of the resin composition according to the present invention are described below.

<1> A resin composition for a molded article to be painted with a water-based paint, containing a polystyrene-based resin (A1) and an eggshell powder (B1), wherein the ratio of the eggshell powder (B1) is 50 mass% or more with respect to the total mass of the resin composition.

<2> The resin composition for a molded article to be painted with a water-based paint according to <1>, wherein the average particle diameter (D50) of the eggshell powder is 1-50 $\mu$m.

<3> The resin composition for a molded article to be painted with a water-based paint according to <1> or <2>, wherein the polystyrene-based resin (A1) contains polystyrene (GPPS).

<4> The resin composition for a molded article to be painted with a water-based paint according to any one of <1> to <3>, wherein the following formulas (1)-(2) are satisfied.

$$\theta1-\theta2 \geq 3° \cdots (1)$$

$$\theta2 \leq 90° \cdots (2)$$

(In formulas (1)-(2), $\theta1$ is the contact angle, with respect to water, of a molded article obtained from the polystyrene-based resin (A1), measured by the $\theta/2$ method, and $\theta2$ is the contact angle, with respect to water, of a molded article obtained from the resin composition, measured by the $\theta/2$ method.)

<5> A resin composition for a molded article to be painted with a water-based paint, wherein the resin composition contains a polyolefin-based resin (A2) and at least one organic filler (B2) selected from tea grounds and coffee grounds, wherein the ratio of the organic filler (B2) is 50 mass% or more with respect to the total mass of the resin composition.

<6> The resin composition for a molded article to be painted with a water-based paint according to <5>, wherein the polyolefin based-resin (A2) contains polystyrene.

<7> The resin composition for a molded article to be painted with a water-based paint according to <5> or <6>, wherein the following formulas (3)-(4) are satisfied.

$$\theta3-\theta4 \geq 3° \cdots (3)$$

$$\theta 4 \leq 90° \cdots (4)$$

(In formulas (3)-(4), $\theta 3$ is the contact angle, with respect to water, of a molded article obtained from the polyolefin based-resin (A2), measured by the $\theta/2$ method, and $\theta 4$ is the contact angle, with respect to water, of a molded article obtained from the resin composition, measured by the $\theta/2$ method.)

<8> A molded article containing the resin composition for a molded article to be painted with a water-based paint according to any one of <1> to <7>.

## EXAMPLES

Hereinafter, the present invention shall be explained in more detail by providing examples, but the present invention is not limited by the descriptions below.

[Example 1]

As the inorganic filler (B1), 60 parts by mass of an eggshell powder (product name "GT-26" manufactured by Green Techno21 CO., LTD.; average particle diameter (D50): 30 $\mu$m) and as the thermoplastic resin (A), 40 parts by mass of a polystyrene resin (product name "Toyo Styrol (registered trademark) GP-HRM61C" manufactured by TOYO-STYRENE CO., LTD.; GPPS, Mw 245000) were weighed and mixed. Thereafter, the eggshell powder and the polystyrene resin were fed into a twin-shaft kneader (product name "Plasti-Corder (registered trademark) W 50 EHT" manufactured by Brabender) and kneaded at a kneading temperature of 200°C and a rotation speed of 100 rpm for 10 minutes, thereby obtaining a resin composition. The obtained resin composition was press molded with a pressure forming machine (50 t heat forming machine manufactured by SHOJI Co., Ltd.) at a heating temperature of 200°C, a pressure of 5 MPa, a preheating time of 3 minutes, and a pressurizing time of 3 minutes, thereby obtaining a molded article of 150 mm x 150 mm x 1.0 mm in thickness. Moreover, as a comparison sample, only the above polystyrene resin was press molded under the same conditions to produce a comparative molded article of 150 mm x 1500 mm x 1.0 mm in thickness.

Note that the average particle diameter (D50) of the eggshell powder was measured under the following conditions.

The D50 particle diameter was measured by using a laser diffraction and scattering particle size distribution measurement machine (manufactured by Beckman Coulter; product name: LS 13 320) with water (refractive index: 1.3) as the solvent, and as a pretreatment for 1 minute, using a homogenizer (manufactured by Branson Ultrasonics Corporation; model: DIGITAL SONIFIER 450) for dispersion processing of the eggshell powder.

<Evaluation of paintability>

The paintability, with respect to water-based paint, of the molded article obtained in Example 1 was evaluated by means of wettability with respect to water (contact angle).

1 $\mu$L of distilled water was dripped onto the surface of the molded article, and a contact angle measuring device (manufactured by Kyowa Interface Science Co., Ltd.; product name: "Automatic Contact Angle Meter DM-500") was used to measure the contact angle $\theta 2$ with respect to water at a condition of 25°C. Next, the contact angle $\theta 1$, with respect to water, of the comparative molded article was measured under the same conditions. If the contact angle $\theta 1$ of the comparative molded article with respect to water is at least 3° or greater than the contact angle $\theta 2$ of the molded article with respect to water, it can be judged that the wettability of the molded article has improved. It is believed that improving the wettability with respect to water will also improve the paintability with respect to water-based paint. Therefore, the wettability with respect to water was evaluated according to the following evaluation criteria. The results are shown in Table 1.

(Evaluation criteria)

Good: $\theta 1-\theta 2$ is 3° or more

Fail: $\theta 1-\theta 2$ is less than 3°

<Evaluation of processability>

The processability of the resin composition was evaluated by the dispersibility of the filler (B) during kneading. When the thermoplastic resin (A) and the filler (B) were kneaded, cases in which the filler (B) did not agglomerate and was dispersed in thermoplastic resin (A) was defined as "good", and cases in which the filler (B) agglomerated or did not disperse in the thermoplastic resin (A) was defined as "fail". Note that the evaluation of the processability was performed by visual inspection. The results are shown in Table 1.

[Example 2]

Instead of the inorganic filler (B1) (eggshell powder), the organic filler (B2) was used to obtain the resin composition with a composition shown in Table 1. Note that as the organic filler (B2), tea grounds (crushed Japanese tea, water content of 5%, average particle diameter of 1.5 mm) were used. In addition, a molded article was prepared by the same method as in Example 1. Thereafter, the paintability and the processability were evaluated by the same methods as in Example 1. The results are shown in Table 1. Note that for the average particle diameter of the tea grounds, the maximum particle diameter (major axis or diameter) of 20 tea grounds was measured using calipers and the average value thereof was employed. In addition, the water content of the tea grounds was measured using a Karl Fischer Moisture Titrator (manufactured by KYOTO ELECTRONICS MANUFACTURING CO., LTD.; product name: MKC-510).

[Example 3]

As the organic filler (B2), coffee grounds (water content of 2%, average particle diameter of 1.5 mm) were used, and as the thermoplastic resin (A), polypropylene (polyolefin based-resin (A2)) (product name "Novatec (registered trademark) PP-BC03B" manufactured by Japan Polypropylene Corporation; MFR: 30 g/10 min) was used to obtain a resin composition with the composition shown in Table 1. In addition, a molded article and a comparative molded article (Reference Example 2) were prepared by the same method as in Example 1. Thereafter, the paintability and the processability was evaluated by the same methods as in Example 1. The results are shown in Table 1. Note that for the average particle diameter of the coffee grounds, the maximum particle diameter (major axis or diameter) of 20 coffee grounds was measured using calipers and the average value thereof was employed. In addition, the water content of the coffee grounds was measured using a Karl Fischer Moisture Titrator (manufactured by KYOTO ELECTRONICS MANUFACTURING CO., LTD.; product name: MKC-510).

[Examples 4 to 9 and Comparative Examples 1 to 6]

Aside from the resin compositions composed as shown in Tables 1 and 2, resin compositions were prepared by the same method as in Example 1 to obtain molded articles. In addition, the paintability and the processability were evaluated by the same methods as in Example 1. The results are shown in Tables 1 and 2.
The details of the raw materials shown in Tables 1 and 2 are as described below.

<Thermoplastic resin (A)>

Polystyrene-based resin (A1): GPPS (product name "Toyo Styrol GP-HRM61C", manufactured by TOYO-STYRENE CO., LTD.; Mw: 245000).
Polyolefin-based resin (A2):polypropylene (product name "Novatec PP-BC03B" manufactured by Japan Polypropylene Corporation; MFR: 30 g/10 min).

(Filler (B))

Inorganic filler (B1-1): eggshell powder (product name "GT-26" manufactured by Green Techno21 CO., LTD.; average particle diameter (D50): 30 μm).
Organic filler (B2-1): tea grounds (water content of 2%, average particle diameter of 1.5 mm).
Organic filler (B2-2): coffee grounds (water content of 2%, average particle diameter of 1.5 mm).

Table 1

| TABLE 1 | | | | EX. 1 | EX. 2 | EX. 3 | EX. 4 | EX. 5 | EX. 6 | EX. 7 | EX. 8 | EX. 9 | REF EX. 1 | REF EX. 2 |
|---|---|---|---|---|---|---|---|---|---|---|---|---|---|---|
| RESIN COMPOSITION | THERMOPLASTIC RESIN (A) | POLYSTYRENE-BASED RESIN (A1) | (PARTS BY MASS) | 40 | 40 | | 50 | 30 | 50 | 30 | | | 100 | |
| | | POLYOLEFIN-BASED RESIN (A2) | | | | 40 | | | | | 50 | 30 | | 100 |
| | FILLER (B) | INORGANIC FILLER (81-1) | | 60 | | | 50 | 70 | | | | | | |
| | | ORGANIC FILLER (B2-1) | | | 60 | | | | 50 | 70 | | | | |
| | | ORGANIC FILLER (B2-2) | | | | 60 | | | | | 50 | 70 | | |
| | MASS RATIO ((A)/(B)) | | (-) | 40/60 | 40/60 | 40/60 | 50/50 | 30/70 | 50/50 | 30/70 | 50/50 | 30/70 | - | - |
| PHYSICAL PROPERTY EVALUATION | PAINTABILITY | CONTACT ANGLE WITH RESPECT TO WATER | (°) | 85 | 90 | 91 | 88 | 84 | 91 | 89 | 91 | 91 | 97 | 94 |
| | | EVALUATION RESULT | (-) | GOOD | GOOD | GOOD | GOOD | GOOD | GOOD | GOOD | GOOD | GOOD | - | - |
| | PROCESSABILITY | EVALUATION RESULT | (-) | GOOD | GOOD | GOOD | GOOD | GOOD | GOOD | GOOD | GOOD | GOOD | - | - |

Table 2

| TABLE 2 | | | | COMP EX. 1 | COMP EX. 2 | COMP EX. 3 | COMP EX. 4 | COMP EX. 5 | COMP EX. 6 |
|---|---|---|---|---|---|---|---|---|---|
| RESIN COMPOSITION | THERMOPLASTIC RESIN (A) | POLYSTYRENE-BASED RESIN (A1) | (PARTS BY MASS) | 80 | 20 | 80 | 20 | | |
| | | POLYOLEFIN-BASED RESIN (A2) | | | | | | 80 | 20 |
| | FILLER (B) | INORGANIC FILLER (B1-1) | | 20 | 80 | | | | |
| | | ORGANIC FILLER (B2-1) | | | | 20 | 80 | | |
| | | ORGANIC FILLER (B2-2) | | | | | | 20 | 80 |
| | MASS RATIO ((A)/(B)) | | (-) | 80/20 | 20/80 | 80/20 | 20/80 | 80/20 | 20/80 |
| PHYSICAL PROPERTY EVALUATION | PAINTABILITY | CONTACT ANGLE WITH RESPECT TO WATER | (° ) | 97 | NOT MEASURABLE | 96 | NOT MEASURABLE | 94 | NOT MEASURABLE |
| | | EVALUATION RESULT | (-) | FAIL | MEASURABLE | FAIL | MEASURABLE | FAIL | |
| | PROCESSABILITY | EVALUATION RESULT | (-) | GOOD | FAIL | GOOD | FAIL | GOOD | FAIL |

In Table 1, Reference Examples 1 and 2 evaluate the paintability and the processability of resins consisting only of the polystyrene-based resin (A1) or the polyolefin-based resin (A2). The resin compositions in the Examples and Comparative examples were evaluated with respect to paintability on the basis of the contact angle values in Reference Example 1 or 2. Among these, the resin compositions of Examples 1 to 9, which satisfy the composition of the present invention, had contact angles with respect to water that changed by 3° or more from the values in Reference Examples 1 or 2 and had improved wettability. In contrast therewith, the resin compositions of Comparative Examples 1 to 6, which do not satisfy the composition of the present invention, had no change in wettability with respect to water and could not solve the problem. In addition, the resin compositions in Comparative Examples 2, 4, and 6 had poor processability, and the wettability of the molded articles could not be evaluated. From the above results, it was found that the resin composition according to the present invention can provide a molded article that has a good paintability with respect to water-based paints. In addition, since the resin composition according to the present invention has the filler (B) derived from natural materials blended with the thermoplastic resin (A) at a certain ratio, the blending amount of the thermoplastic resin (A) in the resin composition can be reduced and a molded article with less environmental impact can be provided.

**Claims**

1. A resin composition for a molded article to be painted with a water-based paint, the resin composition containing:

   a thermoplastic resin (A), and a filler (B) derived from natural materials at a mass ratio ((A)/(B)) of 50/50-30/70, wherein the filler (B) contains at least one filler selected from an inorganic filler (B1) derived from a biomineral and an organic filler (B2) derived from a plant.

2. The resin composition for a molded article to be painted with a water-based paint according to claim 1, wherein the thermoplastic resin (A) contains a polystyrene-based resin (A1), and the filler (B) contains the inorganic filler (B1) or the organic filler (B2).

3. The resin composition for a molded article to be painted with a water-based paint according to claim 1, wherein the thermoplastic resin (A) contains a polyolefin-based resin (A2), and the filler (B) contains the organic filler (B2).

4. The resin composition for a molded article to be painted with a water-based paint according to claim 1 or 2, wherein the inorganic filler (B1) contains at least one powder selected from an eggshell powder and a mollusk shell powder.

5. The resin composition for a molded article to be painted with a water-based paint according to any one of claims 1 to 3, wherein the organic filler (B2) contains a crushed material from a tree.

6. The resin composition for a molded article to be painted with a water-based paint according to claim 5, wherein the crushed material from a tree contains at least one crushed material selected from a leaf, a stem, a bud, and a seed of a tree.

7. The resin composition for a molded article to be painted with a water-based paint according to any one of claims 1 to 6, wherein the filler (B) is a filler derived from food waste.

8. The resin composition for a molded article to be painted with a water-based paint according to claim 7, wherein the organic filler (B2) contains at least one filler selected from tea grounds and coffee grounds.

9. A molded article containing the resin composition for a molded article to be painted with a water-based paint according to any one of claims 1 to 8.

## INTERNATIONAL SEARCH REPORT

| International application No. |
| --- |
| **PCT/JP2022/004990** |

| A. | CLASSIFICATION OF SUBJECT MATTER |
| --- | --- |

*C08L 97/02*(2006.01)i; *C08L 101/00*(2006.01)i
FI: C08L101/00 ZAB; C08L97/02

According to International Patent Classification (IPC) or to both national classification and IPC

| B. | FIELDS SEARCHED |
| --- | --- |

Minimum documentation searched (classification system followed by classification symbols)

C08L97/02; C08L101/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2008/072708 A1 (ASAHI KASEI CHEMICALS CORPORATION) 19 June 2008 (2008-06-19) | 1-3, 5-9 |
| | claims, paragraph [0080], examples | |
| Y | | 1-3, 7-9 |
| A | | 4 |
| X | JP 2012-505281 A (ROQUETTE FRERES) 01 March 2012 (2012-03-01) | 1-3, 5, 6, 9 |
| | claims, paragraphs [0037], [0039], [0040], [0131], examples | |
| A | | 4, 7, 8 |
| Y | JP 2010-138238 A (AGA S KK) 24 June 2010 (2010-06-24) | 1-3, 7-9 |
| | claims, examples | |
| A | | 4-6 |
| A | JP 2004-155944 A (KANEGAFUCHI CHEM IND CO LTD) 03 June 2004 (2004-06-03) | 1-9 |
| | entire text | |
| A | JP 2004-292805 A (NOF CORP) 21 October 2004 (2004-10-21) | 1-9 |
| | entire text | |

| ✓ Further documents are listed in the continuation of Box C. | ✓ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **25 March 2022** | **12 April 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

International application No.

**PCT/JP2022/004990**

C.      DOCUMENTS CONSIDERED TO BE RELEVANT

| Category* | Citation of document, with indication, where appropriate, of the relevant passages | Relevant to claim No. |
|---|---|---|
| A | JP 2010-106270 A (SONY CORP) 13 May 2010 (2010-05-13) <br> entire text | 1-9 |
| A | JP 2017-171770 A (SEKISUI PLASTICS) 28 September 2017 (2017-09-28) <br> entire text, all drawings | 1-9 |
| P, A | JP 2021-152129 A (TBM CO LTD) 30 September 2021 (2021-09-30) <br> entire text | 1-9 |

Form PCT/ISA/210 (second sheet) (January 2015)

**INTERNATIONAL SEARCH REPORT**
Information on patent family members

International application No.

**PCT/JP2022/004990**

| Patent document cited in search report | | | Publication date (day/month/year) | Patent family member(s) | | | Publication date (day/month/year) |
|---|---|---|---|---|---|---|---|
| WO | 2008/072708 | A1 | 19 June 2008 | US claims, paragraph [0081], examples | 2010/0021715 | A1 | |
| | | | | CN | 101557917 | A | |
| JP | 2012-505281 | A | 01 March 2012 | US claims, paragraphs [0062], [0064], [0065], [0183], examples | 2011/0196071 | A1 | |
| | | | | EP | 2344580 | A1 | |
| | | | | CN | 102186916 | A | |
| | | | | KR 10-2011-0090894 | | A | |
| JP | 2010-138238 | A | 24 June 2010 | (Family: none) | | | |
| JP | 2004-155944 | A | 03 June 2004 | (Family: none) | | | |
| JP | 2004-292805 | A | 21 October 2004 | (Family: none) | | | |
| JP | 2010-106270 | A | 13 May 2010 | US entire text | 2012/0053258 | A1 | |
| | | | | CN | 102227477 | A | |
| JP | 2017-171770 | A | 28 September 2017 | (Family: none) | | | |
| JP | 2021-152129 | A | 30 September 2021 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S61106646 A

- JP 2016188338 A